# EUROPEAN PATENT SPECIFICATION

(11) **EP 1 335 517 B1**
(45) Date of publication and mention of the grant of the patent: **03.10.2007**
(21) Application number: 03001558.0
(22) Date of filing: 23.01.2003
(51) Int. Cl.: H04L 1/18, H04L 1/00

(54) **Selective retransmission method for an ARQ protocol**
Selektives Sendewiederholungsverfahren für ein ARQ Protokoll
Procédé de retransmission sélective pour un protocole ARQ

(30) Priority: 08.02.2002 IT MI20020229
(43) Date of publication of application: 13.08.2003
(73) Proprietor: Siemens S.p.A., 20126 Milano (IT)
(72) Inventor: Cavalli, Giulio, 20159 Milan (IT); Santacesaria, Claudio, 20100 Milan (IT)
(74) Representative: Berg, Peter

(56) References cited:
- WO-A-00/60799
- WO-A-02/05496
- WO-A-02/069548

## Description

### FIELD OF THE INVENTION

The present finds application in all the transmission systems characterized by a data flow between a transmitting unit and a receiving one, inside which flow, more connections are multiplexed, out of which some taking advantage of the retransmission at "data link" level (called ARQ from English Automatic Repeat Request) while others, subject to less stringent targets of Bit Error Rate (BER) but more stringent in terms of delay, have better performances in lack of retransmissions.

The transmission in said systems takes place for transmission elementary units, hereinafter identified with the generic term "packets", said transmission units being also able of being identified in ATM cells, IP packets, portions of IP packets or any other data elementary unit, belonging to the same connection and consecutively transmitted inside the transmission channel.

### BACKGROUND OF THE INVENTION

In the background art, transmission systems are characterized in that the two or more parts involved in the transmission /reception exchange information units, called also packets, to form the information flow, called also data flow. The information flow is made up of one or more connections. A connection is characterized by well specific traffic parameters. Each single packet can be associated to one sole connection. That is, a packet transports data belonging to a sole connection.

When the transmission mean is not completely reliable, error correction techniques are usually employed in order to limit the loss of information units, and thus reduce the error rate. The error correction techniques mentioned above are called FEC (Forward Error Correction).

For example and for a more clear description, but not limited to the same, reference is made to an important family of FEC codes, that is, that of block codes. These are characterized in that they subdivide the information flow into 'blocks'. Each single block is separately processed adding some redundancy data. According to the block code used, a given number of possible errors due to data transmission can be corrected at the receiver. The blocks having relative redundancy are then consecutively transmitted to form the transmission flow.

The above-mentioned block codes protect a given number of information packets. That is to say that a block contains a given number of packets inside.

In reception, each block is decoded and the information packets contained in the same are extracted. Only after the decoding process the receiver can know the content of the block. Whenever an error that cannot be corrected by the code is detected at the receiver, the whole block is eliminated and consequently all the packets therein contained are lost. In this case the error correction code performs also the function of identifying those errors that cannot be corrected. In case of loss of a block, the receiver cannot know the content of the block. In this case, the error detector code, will signal an error. The presence of one sole code both corrector and detector, though typical, has not to be considered as a restriction, since the present invention remains valid also in presence of the sole detector code or of a couple of different codes in which a code performs the correction function only while the second performs the sole detection function.

WO 00/60799 describes a telecommunication system and method for implementing a semi-reliable retransmission protocol that utilizes both selective ARQ and segmentation of the SDU (Service Data Unit) into many PDUs (Protocol Data Unit). A time based triggering of a retransmission timeout is defined based upon the maximum delay allowable for the retransmission of corrupted data packets over the air interface. For every data packet received, a discard timer monitoring the transmission time of the data packet is initialised. If the timer elapses for the data packet, this data packet is marked as discarded in the transmitter and a request is sent to the receiver to ensure that transmissions carrying that data packet are discarded in the receiver. The use of the discard timer allows the retransmission timeout to become insensitive to variations in the channel rate. When the discard timer is expired all the PDU packets included in the SDU block shall be retransmitted, indifferently of the fact that in some of the discarded PDUs the ARQ is not used and their retransmission is unneeded.

EP 771092 describes a packet data transmission method through the on-air interface of a system for cellular telephony based on a hybrid FEC and ARQ. Once the FEC is decoded, the receiver determines the good result of the transmission and emits a positive or negative acknowledgement message. These messages are received by the transmitting terminal and in case of positive acknowledgement the packet transmission is considered as completed.

WO 02/069548 cited under the provisions of Art-54 (3) EPC, describes a method whereby the control unit produces a sequence of blocks, each comprising a header and data to be transmitted. Each block is transmitted to the destination terminal with a level of error protection which is selected from among several pre-defined levels, the selected level being indicated in a piece of signalling information that accompanies the block transmitted. The header of each block comprises an acknowledgement control field which is activated intermittently by the control unit in order to request an acknowledgement of blocks from the terminal. A higher level of protection is selected for transmitting blocks having a header with an activated acknowledgement control field, than for transmitting blocks having a header with a non-activated acknowledgement control field. If the transmission window is blocked, in spite of the supplementary protection, the transmission window must be reinitialized and all the unacknowledged blocks herein included shall be retransmitted.

WO200010298 describes a FEC and ARQ method for error correction in data networks. The subject patent application describes a terminal-based transmission method, that is, the terminal retransmits the whole block as it was originally structured.

In conclusion, the traditional retransmission techniques (ARQ) require the transmitter to fully retransmit the block, called coded block, which was detected wrong through the detector code.

The Wang S, Zheng H, Copeland J.A, 2000 IEEE 51 ST, Conference Proceedings Article titled: "AN ERROR CONTROL DESIGN FOR MULTIMEDIA WIRELESS NETWORKS"; VEHICULAR TECHNOLOGY CONFERENCE Japan, May 15-18, 2000, IEEE, New York, US, discloses a QoS aware SR-ARQ schema for Multimedia Wireless Networks thought for future use in mobile communications. This QSR-ARQ error control mechanism addresses three different QoS service classes inside the same MPEG video stream. These classes are respectively associated to different retransmission requirements, namely: class 1 of *"no loss data"* is directed to frame headers; class 2 of *"assured data"* is directed to the I- and P-anchor frames; and class *3 "disabled retransmission"* is directed to the B-frames. An additional NOX signalling message is foreseen to limit the maximum permissible retransmission delay.

### SCOPE AND SUMMARY OF THE INVENTION

Scope of the present invention is to identify a transmission method based on a retransmission technique (ARQ) overcoming the drawbacks typical of the known art and to identify a connection based transmission method, that is to identify a method in which the retransmission functionality is a characteristic property of a connection as it can be noticed in the following claim 1. Always according to the invention, the retransmission functionality can be enabled or disabled for each connection inside the data flows.

According to the invention, a connection can be configured in such a way that lost packets are retransmitted. In this case we say that the ARQ function is 'enabled' for this connection. On the contrary, a different connection belonging to the data flow can be configured with the 'disabled' ARQ function, that is, the packets possibly lost during the transmission shall not be retransmitted.

In fact, from the studies conducted by the applicant, it resulted that some connections, such as for instance data connections, suffer the loss of packets but are scarcely affected by the delay; other connections, like voice connections, are highly affected by the delay and scarcely affected by the loss of packets. Therefore, according to the invention, the retransmission is enabled, which opposes to the loss of packets subject to a delay, for the connections of the first type only.

Therefore, the invention enables to manage that the connections configured with 'disabled' ARQ are not affected in any way by the presence of ARQ retransmissions on the other connections. Moreover, the present invention, defining an appropriate retransmission strategy of the packets lost, causes that no band waste occurs.

When the error detector code signals that a coded block is corrupted, that is, when it is lost and cannot be decoded, the receiver informs the transmitter of the wrong reception through appropriate signal messages that can be called negative acknowledgement or retransmission requests. The above-mentioned receiver cannot require the selective retransmission of the block, only in the case it contains packets of connections configured with enabled ARQ, because the receiver cannot know the content of the lost block.

The receiver, from the moment on which it has received a wrong block, continues to transfer at output, towards the network or towards the subsequent data processing stages, only the packets belonging to the connections with disabled ARQ, while it starts storing and holding inside all the packets belonging to the connections with enabled ARQ.

The transmitter receiving a request for the retransmission of a coded block, extracts from the memory the coded block previously transmitted and decides, on the basis of the present invention, what to retransmit depending on the packets contained in the above mentioned coded block lost.

With the present invention, if the above-mentioned block contained packets of connections configured with 'enabled' ARQ, the transmitter retransmits the block as it is. In the contrary instance, if the block contained packets of connections configured with 'disabled' ARQ the transmitter can transmit new packets, but always belonging to connections configured with 'disabled' ARQ (the same or other connections). The term "new packets" is intended to make a distinction in respect with the packets scope of retransmission. With the present invention the receiver, when it correctly receives the retransmitted block, analyses to which connection typologies the packets contained in the above-mentioned retransmitted block belong. If the packets are of connections configured with 'enabled' ARQ, the receiver reinserts the packets in the correct position of the reconstruction memory and restarts the transfer of the packets belonging to connections with enabled ARQ previously stored. If the packets are relevant to connections configured with 'disabled' ARQ the receiver will recognize them as new and will immediately transfer them to the next processing stages, restarting also the transfer of the packets belonging to the connections with enabled ARQ previously stored.

Should the block to retransmit contain both packets of connections configured with 'enabled' ARQ and packets of connections configured with 'disabled ARQ, the transmitter will retransmit the packets of the connections configured with 'enabled' ARQ, maintaining the relevant order, but not necessarily the position inside the coded block, while it will replace the packets of connections configured with 'disabled' ARQ with new packets of the same or other connections configured with 'disabled' ARQ.

The invention, together with further characteristics of the invention that are considered to be novel, may be understood from the subjoined claims

### BRIEF DESCRIPTION OF DRAWINGS

The invention, together with further objects and advantages thereof that are considered to be novel, may be understood from the following description and appreciated with reference to the attached drawings, in which:
**Figure 1** shows the FEC block to retransmit;
**Figure 2** shows the configuration of a possible FEC block retransmitted;
**Figure 3** shows and additional configuration of a possible FEC block retransmitted;

### DESCRIPTION OF A PREFERRED EMBODIMENT OF THE INVENTION

According to the invention, a data flow packet contains an identifier of the connection it belongs to. On reception of said packet, the receiver identifies the connection parameters, among which the status (enabled or disabled) of the ARQ function, through the analysis of the mentioned connection identifier.

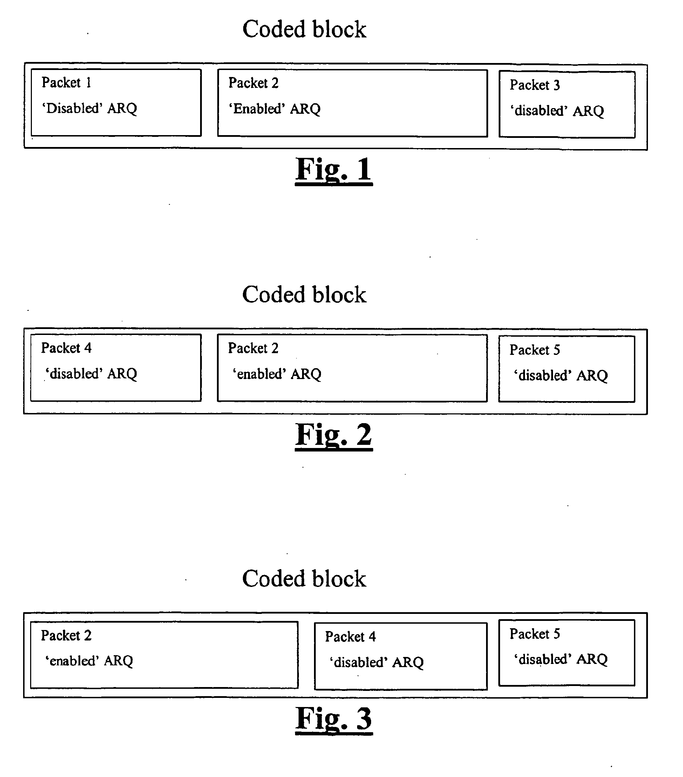

When a terminal must retransmit a coded block, such as for instance that shown in figure 1, it must decide what to include in the above-mentioned block. The transmitter will include again in the block to be retransmitted the possible packets belonging to connections configured with 'enabled' ARQ.

On the contrary, the transmitter shall not retransmit the packets of connections configured with 'disabled' ARQ. The retransmission of the above mentioned packets are absolutely useless: the transmitter shall therefore replace the mentioned packets belonging to connections configured with 'disabled ARQ by new packets.

Therefore, the transmitter shall send a new block replacing the packets that belonged to connections configured with 'disabled' ARQ by new packets provided that they too belong to connections configured with 'disabled' ARQ (figure 2). The transmission of new packets of connections configured with 'enabled' ARQ inside a retransmitted block would lead to the consequence of a possible out of sequence in reception for the above mentioned connection.

The order of the packets inside the retransmitted block has not to be met; on the contrary it is often convenient to re-order the packets, including all the packets, belonging to connections configured with 'enabled' ARQ and then retransmit, at the starting of the block, queuing up the transmission of new packets belonging to connections configured with 'disabled' ARQ, in the space left free in the block. In practice, the new packets, corresponding to packets belonging to connections configured with 'disabled' ARQ, and the packets actually retransmitted, which correspond to the packets belonging to connections configured with 'enabled' ARQ, can be arranged inside the FEC block to retransmit in any order (figure 3), provided that the order among the retransmitted packets, according to which said packets had been transmitted the first time, is maintained.

The behaviour of the transmitting and receiving stations deserves being deepened. The transmitting station shall keep the memory of all the packets transmitted belonging to connections with enabled ARQ and of the relevant transmission position (in which coded block they have been transmitted) for all the time it can expect to receive a notice of wrong reception. On receipt of an explicit notice of correct reception or at the maximum time out it can receive a negative notice, the transmitting station can reject the packets. When a signal of wrong reception of a block and relevant invitation to retransmit the packets with enabled ARQ therein contained is received, the receiving station shall compose a new coded block including at least the packets with enabled ARQ contained in the lost block, in the order they had been transmitted the first time, possibly replacing the packets belonging to connections with disabled ARQ by other new packets belonging to the same or to other connections with disabled ARQ.

The receiving station, in addition to notifying the wrong reception of the blocks and possibly the correct receptions, shall perform the following operations: on receipt of a wrong block it shall withhold all the subsequent packets of all the connections with enabled ARQ only, up to the correct reception of the retransmission of the wrong block in order to restore the correct order of the packets belonging to the connections with enabled ARQ possibly contained in the wrong block.

The receiving station must keep the retransmission status of all the blocks of which it signals the wrong reception and only at the end of the process it can restart sending the packets of connections with enabled ARQ at output. With this approach, the method works also with time-superimposed retransmissions of different blocks and multiple retransmissions of the same block. However, to avoid the need for a too large memory in the receiving station it is convenient to set a restriction on the maximum number of retransmissions of the same block.

The connections with disabled ARQ are never stopped or stored and therefore, they are not affected at all by the presence of the ARQ mechanism for the other connections.

The many advantages and features of the present invention will be appreciated from the foregoing description of a preferred embodiment. It should be understood that the present invention is not limited thereto but that embodiments and/or additions thereto could be made by those skilled in the art without departing from the scope of the following claims.

## Claims

1. Transmission method suitable to enable the exchange of an information flow between at least one transmitting station and at least one receiving station including the following steps:
a) subdividing the information flow into packets each containing a connection identifier indicating the configuration either enabled for no-loss tolerant data, or disabled for loss tolerant data, of the retransmission function;
b) multiplexing in a same transmission flow between the transmitting station and the receiving station packets configured with enabled retransmission and packets configured with disabled retransmission;
c) coding the packet-multiplexed flow with a block code provided with error detection function and transmitting the coded blocks;
d) transmitting from the receiving to said transmitting station a negative acknowledgement message any time the receiving station receives a coded block affected by errors that cannot be corrected through possible error correction functions,
e) transmitting from the transmitting station in reply to the reception of said negative acknowledgement a coded block including the packets previously transmitted with enabled retransmission and new packets with disabled retransmission replacing the packets previously transmitted with disabled retransmission.

2. Method according to claim 1, **characterized in that** the above mentioned retransmission step e) of the packets configured with enabled retransmission is made according to the order said packets had been transmitted the first time.

3. Method according to claim 1, **characterized in that** it foresees also a reordering phase consisting in including all the packets configured with enabled retransmission at the starting of the block.

4. Method according to one of the previous claims,**characterized in that** in case of loss of more coded blocks the retransmission is made block by block in the same order the blocks had been transmitted the first time.

5. Method according to one of the previous claims, **characterized in that** in case of loss of a retransmitted block the retransmission is repeated a limited number of times.

6. Method according to one of the previous claims, **characterized in that** in case of loss of a retransmitted block the retransmission is repeated one sole time.

7. Method according to claims 1 to 5, **characterized in that** in case of loss of a retransmitted block, the retransmission is repeated an indefinite number of times.

## Patentansprüche

1. Übertragungsverfahren, das geeignet ist für den Austausch eines Datenflusses zwischen wenigstens einer Sende- und einer Empfangsstation, einschließlich der folgenden Schritte:
a) Unterteilung des Datenflusses in Pakete, die jeweils eine Verbindungskennung enthalten, die angibt, ob die Übertragungswiederholungs-Funktion entweder für nicht verlusttolerante Daten aktiviert oder für verlusttolerante Daten deaktiviert konfiguriert ist;
b) Multiplexen von Paketen, die mit aktivierter Übertragungswiederholung konfiguriert sind, sowie von Paketen, die mit deaktivierter Übertragungswiederholung konfiguriert sind, in demselben Datenfluss zwischen der Sende- und Empfangsstation;
c) Kodierung des Paket-Multiplexflusses mit einem Blockcode mit Fehlererkennungsfunktion und Übertragung der kodierten Blöcke;
d) Übertragung einer negativen Bestätigungsnachricht von der Empfangs- zu der besagten Sendestation, immer wenn die Empfangsstation einen kodierten Block erhält, der Fehler aufweist, die nicht durch mögliche Fehlererkennungsfunktionen behoben werden können,
e) Übertragung eines kodierten Blocks von der Sendestation als Antwort auf den Empfang der besagten negativen Bestätigungsnachricht, der die zuvor gesendeten Pakete mit aktivierter Übertragungswiederholung enthält sowie neue Pakete mit deaktivierter Übertragungswiederholung, die die zuvor übertragenen Pakete mit deaktivierter Übertragungswiederholung ersetzen.

2. Verfahren gemäß Anspruch 1, **dadurch gekennzeichnet, dass** der o. g. Schritt e) der wiederholten Übertragung der Pakete mit aktivierter Übertragungswiederholung entsprechend der Reihenfolge durchgeführt wird, in der die besagten Pakete beim ersten Mal übertragen wurden.

3. Verfahren gemäß Anspruch 1, **dadurch gekennzeichnet, dass** es außerdem eine Neusortierungsphase vorsieht, in der alle Pakete mit aktivierter Übertragungswiederholung am Beginn des Blocks zusammengefasst werden.

4. Verfahren gemäß einem der obigen Ansprüche, **dadurch gekennzeichnet, dass** bei Verlust mehrerer kodierter Blöcke die Übertragungswiederholung blockweise in derselben Reihenfolge durchgeführt wird, in der die Blöcke beim ersten Mal übertragen wurden.

5. Verfahren gemäß einem der obigen Ansprüche, **dadurch gekennzeichnet, dass** bei Verlust eines wiederholten Blocks die Übertragungswiederholung eine begrenzte Anzahl von Malen wiederholt wird.

6. Verfahren gemäß einem der obigen Ansprüche, **dadurch gekennzeichnet, dass** bei Verlust eines wiederholten Blocks die Übertragungswiederholung nur ein einziges Mal wiederholt wird.

7. Verfahren gemäß einem der Ansprüche 1 bis 5, **dadurch gekennzeichnet, dass** bei Verlust eines wiederholten Blocks die Übertragungswiederholung unbegrenzt oft wiederholt wird.

## Revendications

1. Procédé de transmission approprié pour permettre l'échange d'un flux d'informations entre au moins une station d'émission et une station de réception incluant les étapes suivantes consistant à :
a) sous-diviser le flux d'informations en paquets contenant chacun un identificateur de connexion indiquant que la configuration est soit activée pour les données non-tolérantes à la perte, soit désactivée pour les données tolérantes à la perte, de la fonction de retransmission ;
b) multiplexer dans un même flux de transmission entre la station d'émission et la station de réception les paquets configurés avec la retransmission activée et les paquets configurés avec la retransmission désactivée ;
c) coder le flux multiplexé des paquets avec un code de bloc muni d'une fonction de détection d'erreur et transmettre les blocs codés ;
d) transmettre de la station de réception à ladite station d'émission un message d'acquittement négatif chaque fois que la station de réception reçoit un bloc codé affecté par des erreurs qui ne peuvent être corrigées par l'intermédiaire des fonctions de correction d'erreur possibles;
e) transmettre de la station d'émission, en réponse à la réception dudit acquittement négatif, un bloc codé incluant les paquets précédemment transmis avec la retransmission activée et les nouveaux paquets avec la retransmission désactivée remplaçant les paquets précédemment transmis avec la retransmission désactivée.

2. Procédé selon la revendication 1, **caractérisé en ce que** l'étape de retransmission e) mentionnée ci-dessus des paquets configurés avec la retransmission activée est effectuée en conformité avec l'ordre selon lequel lesdits paquets ont été transmis la première fois.

3. Procédé selon la revendication 1, **caractérisé en ce qu'**il prévoit également une phase de réordonnancement qui consiste à l'inclusion de tous les paquets configurés avec la retransmission activée au début du bloc.

4. Procédé selon l'une quelconque des revendications précédentes, **caractérisé en ce que** dans le cas de la perte de plusieurs blocs codés, la retransmission est effectuée bloc par bloc dans le même ordre où les blocs ont été transmis la première fois.

5. Procédé selon l'une quelconque des revendications précédentes, **caractérisé en ce que** dans le cas de la perte d'un bloc retransmis, la retransmission est répétée un nombre limité de fois.

6. Procédé selon l'une quelconque des revendications précédentes, **caractérisé en ce que** dans le cas de la perte d'un bloc retransmis, la retransmission est répétée une seule fois.

7. Procédé selon les revendications 1 à 5, **caractérisé en ce que** dans le cas de la perte d'un bloc retransmis, la retransmission est répétée à un nombre indéfini de fois.
